# EUROPÄISCHE PATENTANMELDUNG

(11) **EP 0 734 820 A1**
(43) Veröffentlichungstag der Anmeldung: **02.10.1996**
(21) Anmeldenummer: 96104953.3
(22) Anmeldetag: 28.03.1996
(51) Int. Cl.: B28B 5/00, B28B 17/00, G05D 1/03

(54) **Steinformmaschine zur Herstellung von Betonsteinen**

(30) Priorität: 30.03.1995 DE 19511606
(71) Anmelder: Zenith-Maschinenfabrik GmbH, 57290 Neunkirchen (DE)
(72) Erfinder: Herr, Rüdiger, 57080 Siegen (DE)
(74) Vertreter: Pürckhauer, Rolf, Dipl.-Ing.

(57) **Zusammenfassung**

Die motorisch angetriebene, als Bodenfertiger (1) ausgebildete, nicht schienengebundene Steinformmaschine zur Fertigung von Betonsteinsätzen (2) in parallel verlaufenden Ein- oder Mehrlagenreihen (3) auf einer Bodenfläche (4) ist ohne Anheben der Maschine in Richtung der und quer zur mittleren Fahrzeuglängsachse (5-5) verfahrbar.

Der Bodenfertiger (1) ist mit einem an der Frontseite (6) angebrachten, auf der Mittellängsachse (5-5) angeordneten Laser-Scanner (7) ausgerüstet, der als Sicherheitseinrichtung die Längs- und Querfahrt zur Einhaltung von Sicherheitsbereichen (8a, 8b) von in Fahrtrichtung (a) befindlichen Objekten (9) steuert und bei Verletzung der jeweiligen Sicherheitsbereiche (8a, 8b) den Bodenfertiger (1) verlangsamt oder stillsetzt.

Der Laser-Scanner (7) ist ferner als Entferungsmesser, der während der Fertigung laufend den seitlichen Abstand (10) der Mittellängsachse (5-5) des Bodenfertigers (1) von den gefertigten Steinsätzen (2) einer Steinsatzreihe (3) mißt, Teil einer Steuerung zur Geradeauslenkung des Bodenfertigers (1) mit einem vorgegebenen Abstand (11) seiner Radkästen (12) entlang der Steinsatzreihe (3).

## Beschreibung

Gegenstand der Erfindung ist eine fahrbare, nicht schienengebundene, als Bodenfertiger ausgebildete Steinformmaschine zur Herstellung von Betonsteinen und Betonsteinsätzen in parallel verlaufenden Ein-oder Mehrlagenreihen auf einer Bodenfläche, wobei der Bodenfertiger in Richtung der und quer zur Maschinenlängsachse verfahrbar ist.

Bodenfertiger dieser Art, die aus der DE 42 11 261 C1 bekannt sind, produzieren die Betonsteine satzweise auf einer Bodenfläche in parallel nebeneinander angeordneten Reihen. Bei dem Herstellungsprozeß setzt der Bodenfertiger einen fertiggestellten Steinsatz nach dem anderen mit einem vorgegebenen Abstand entlang einer geraden Bahn ab. Am Bahnende wird der Bodenfertiger quer zur Fertigungsrichtung in eine zweite, parallel zur ersten Bahn verlaufende Bahn verfahren und zu deren Anfang zurückgefahren, worauf der Bodenfertiger die Produktion einer zweiten Betonsteinreihe aufnimmt. Dieser Fertigungsvorgang wiederholt sich entsprechend der Anzahl der für eine Fertigung vorgegebenen Steinreihen. Die Anzahl der pro Bahn gefertigten Betonsteinsätze ist abhängig von den Steinabmessungen und der Bahnlänge und wird üblicherweise in eine Ablaufsteuerung des Bodenfertigers eingegeben.

Der im Hinblick auf die insbesondere hinsichtlich des zulässigen Geräuschpegels verschärften Umweltschutz- und Arbeitsplatzschutzgesetze entwickelte, vollautomatische Bodenfertiger mit einem Betriebsgeräuschpegel über 100 dB nach der DE 42 11 261 C1, der die Anwesenheit von Bedienungspersonal während der Fertigung weitgehendst überflüssig macht, wird durch einen Lasersender gesteuert, der auf einer rechtwinklig zu den zu fertigenden Betonsteinreihen in einer Fertigungshalle fest eingebauten, vorzugsweise an einer Stirnwand der Halle angeordneten Schiene verfahrbar ist. Der Lasersender strahlt Führungssignale entlang einer Geraden in Richtung auf den Bodenfertiger aus, die eine zur Fahr- und Fertigungsebene des Bodenfertigers senkrechte Ebene definieren. Der Bodenfertiger ist mit einem Empfänger für die vom Lasersender ausgestrahlten, gerichteten Führungssignale ausgestattet. Eine mit dem Empfänger verbundene Steuerung des Bodenfertigers wertet die empfangenen Führungssignale aus und berechnet bei einer Abweichung von der durch die Steuerung vorgegebenen Fertigungsbahn eine Korrekturlenkbewegung, die an ein Lenkgetriebe weitergegeben wird, das über ein an das Getriebe gekoppeltes Bugrad die erforderliche Richtungsänderung des Bodenfertigers ausführt. Sobald der Bodenfertiger eine vorgegebene Anzahl von Steinsätzen produziert und das Ende einer Fertigungsbahn bzw. Fertigungsreihe erreicht hat, wird über eine mit der Steuerung des Bodenfertigers verbundene Funksteuerung der Lasersender, der mit einem entsprechenden Empfänger ausgerüstet ist, in eine neue Position verfahren, in der die vom Lasersender ausgestrahlten Führungssignale eine zweite Fertigungsbahn vorgeben, die parallel zur ersten Fertigungsbahn verläuft. Nachdem der Lasersender seine neue Position erreicht hat, senkt der Bodenfertiger ein Querfahrwerk ab und fährt quer zur Fertigungsrichtung, bis sein Empfänger die vom Lasersender ausgestrahlten Führungssignale wieder empfängt. Nach dem Einfahren des Querfahrwerks bewegt sich der Bodenfertiger auf dem normalen Fahrwerk unter Führung durch die Führungssignale des Lasersenders rückwärts bis zum Anfang der zweiten Fertigungsbahn und beginnt die Fertigung einer neuen Steinsatzreihe.

Das Steuersystem zum Lenken des Fahrwerks des bekannten Bodenfertigers ist von der Technik her sehr aufwendig und erfordert dementsprechend hohe Investionskosten. Ferner ist die Betonsteinfertigung mit dem Bodenfertiger ortsgebunden an eine Produktionshalle, da die Steuerung zum Verfahren des Bodenfertigers entlang einer festgelegten Fertigungsbahn einen Lasersender benötigt, der auf einer fest eingebauten Schiene entsprechend einem vorgegebenen Rastermaß für die zu fertigenden Steinreihen abschnittsweise quer zur Fertigungsrichtung verfahrbar ist. Schließlich erlaubt die besondere Steuerung des Bodenfertigers mit ortsgebundenen Steuerelementen keine Betonsteinfertigung im Freien.

Der Erfindung liegt die Aufgabe zugrunde, die Steuerung zur Lenkung der gattungsgemäßen Steinformmaschine bei der Fertigung von ein- oder mehrlagigen Betonsteinsätzen zu vereinfachen.

Diese Aufgabe ist erfindungsgemäß gelöst durch eine Steinformmaschine mit den Merkmalen des Patentanspruches 1.

Die Unteransprüche sind auf vorteilhafte Ausgestaltungen und Weiterbildungen der Erfindung gerichtet.

Die Steuerung der erfindungsgemäßen, als Bodenfertiger ausgebildeten Steinformmaschine, die einen auf der Maschine angeordneten Laser-Scanner verwendet, der als Sicherheitseinrichtung die Längs- und Querfahrt des Bodenfertigers zur Einhaltung eines Sicherheitsbereiches von in Fahrtrichtung befindlichen Objekten steuert und als Entfernungsmesser zur laufenden Messung des seitlichen Abstandes des Bodenfertigers von einer gefertigten Steinsatzreihe und/oder von einer örtlichen Referenz zusammen mit einer Rechner-Steuereinheit die Geradeauslenkung des Bodenfertigers mit einem vorgegebenen Abstand entlang der Steinsatzreihe und/oder von einer örtlichen Referenz während der Fertigung steuert, ist wesentlich einfacher aufgebaut als die Steuerung zur Lenkung bekannter Steinformmaschinen, die mit einem auf einer fest installierten Schiene verfahrbaren Lasersender arbeitet, der gerichtete Signale zur Führung des mit einem entsprechenden Empfänger ausgestatteten Bodenfertigers auf einer geraden Fertigungsbahn ausstrahlt. Die Steuerung ermöglicht einen vollautomatischen Betrieb des Bodenfertigers in einer geschlossenen Halle und im Freien als Ein- oder Mehrlagenfertiger und arbeitet unabhängig von den unterschiedlichen äußeren Konturen der verschiedenen Betonformsteine wie beispielsweise Hohlblocksteine, Kaminsteine, Bordsteine und Gartensteine. Der Bodenfertiger kann ohne Anheben der Maschine Richtungskorrekturen während der Vor- und Rückwärtsfahrt ausführen. Schließlich erfordert der neue Bodenfertiger wesentlich niedrigere Investitionskosten als die bekannten, vollautomatischen Bodenfertiger.

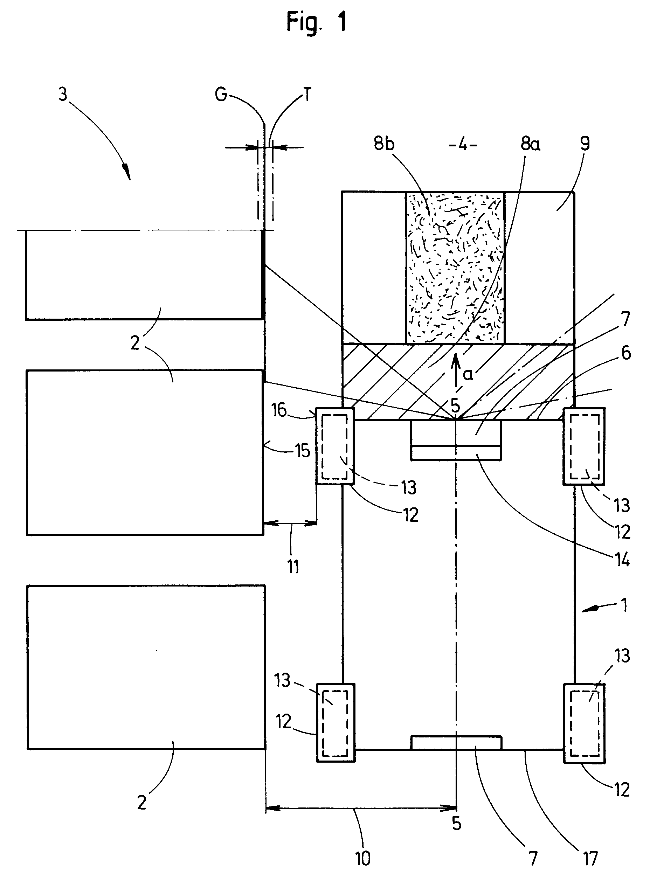

Die Erfindung ist nachstehend anhand schematischer Zeichnungen erläutert. Es zeigt
- Fig. 1: die Draufsicht eines Bodenfertigers und

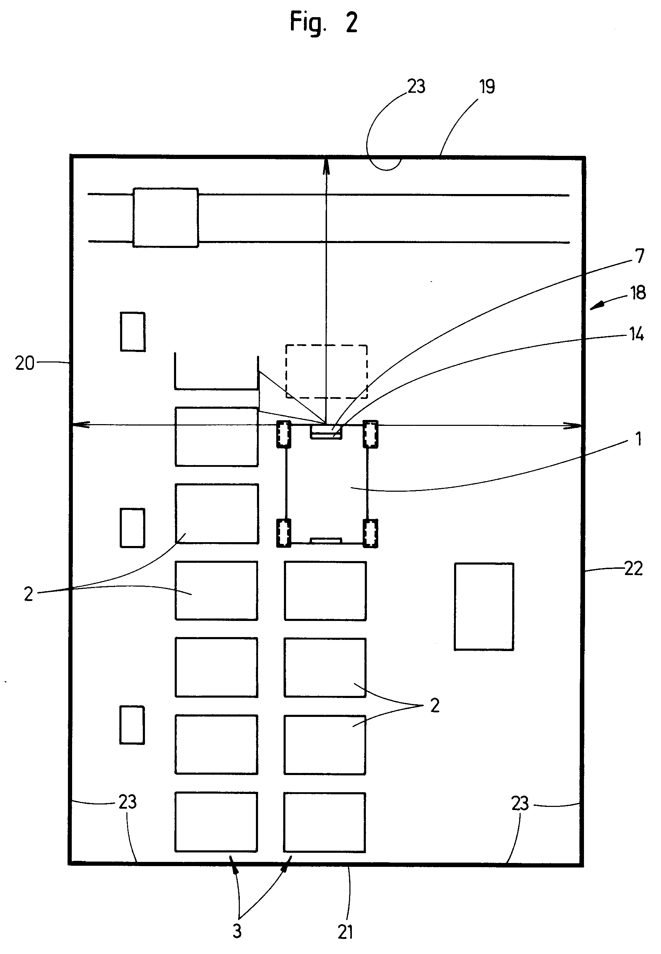

- Fig. 2: eine mit dem Bodenfertiger in einer Halle betriebene Fertigung.

Die motorisch angetriebene, als Bodenfertiger 1 ausgebildete Steinformmaschine zur Fertigung von Betonsteinsätzen 2 in parallel verlaufenden Reihen 3 auf einer Bodenfläche 4 ist in Richtung der und quer zur mittleren Fahrzeuglängsachse 5-5 verfahrbar.

Der Bodenfertiger 1 ist mit einem an der Frontseite 6 angebrachten, auf der Mittellängsachse 5-5 angeordneten Laser-Scanner 7 ausgerüstet, der als Sicherheitseinrichtung die Längs- und Querfahrt zur Einhaltung von Sicherheitsbereichen 8a, 8b von in Fahrtrichtung a befindlichen Objekten 9 steuert und bei Verletzung eines Sicherheitsbereiches den Bodenfertiger 1 verlangsamt oder stillsetzt.

Der Laser-Scanner 7 ist ferner als Entfernungsmesser, der während der Fertigung laufend den seitlichen Abstand 10 der Mittelängsachse 5-5 des Bodenfertigers 1 von den gefertigten Steinsätzen 2 einer Steinsatzreihe 3 mißt, Teil einer Steuerung zur Geradeauslenkung des Bodenfertigers 1 mit einem beliebig vorgebbaren Abstand 11 seiner Radkästen 12 entlang der Steinsatzreihe 3.

Die Steuerung zur Lenkung der Räder 13 des Bodenfertigers 1 während der Fertigung weist eine Rechner-Steuereinheit 14 auf, die entsprechend den Meßsignalen des Laser-Scanners 7 die Räder 13 des Bodenfertigers 1 lenkt.

Die Steuerung für die Lenkung des Bodenfertigers 1 während der Fertigung der Steinsätze 2 einer Steinsatzreihe 3 arbeitet derart, daß der Rechner der Rechner-Steuereinheit 14 aus den laufend gemessenen Abständen 10 zwischen der Mittellängsachse 5-5 des Bodenfertigers 1 und der seitlichen Außenkontur 15 der Steinsätze 2 eine sich an dieser orientierende Führungsgerade G für die Geradeausfahrt des Bodenfertigers 1 errechnet und daß die Steuereinheit 14 bei einem Über- oder Unterschreiten eines durch die Führungsgerade G festgelegten Toleranzbereiches T für den seitlichen Sollabstand 11 des Bodenfertigers 1 zur Steinsatzreihe 3 durch die vom Laser-Scanner 7 gemessenen Seitenabstände 10, die auf den Abstand der Außenkontur 16 der Radkästen 12 zu den Steinsätzen 2 umgerechnet werden, die Lenkstellung der Räder 13 des Bodenfertigers 1 entsprechend korrigiert.

Der Bodenfertiger 1 kann mit einem zusätzlichen Laser-Scanner 7 ausgerüstet werden, der an der Heckseite 17 des Bodenfertigers 1 auf dessen Mittellängschse 5-5 angebracht wird.

Bei einer vollautomatischen Fertigung von Betonsteinen mit dem Bodenfertiger 1 in einer geschlossenen, als Schallschutzraum wirkenden Fertigungshalle 18 dienen an den Hallenwänden 19-22 angeordnete Einrichtungen wie Reflektorbänder 23 als Referenz für den Laser-Scanner 7, insbesondere für die Fertigung der ersten Steinsatzreihe 3.

## Patentansprüche

1. Fahrbare, nicht schienengebundene, als Bodenfertiger ausgebildete Steinformmaschine zur Herstellung von Betonsteinen und Betonsteinsätzen in parallel verlaufenden Ein- oder Mehrlagenreihen auf einer Bodenfläche, wobei der Bodenfertiger während der Vor- und Rückfahrt in Richtung der und quer zur Maschinenlängsachse verfahrbar ist, gekennzeichnet durch einen an der Frontseite (6) des Bodenfertigers (1) angeordneten Laser-Scanner (7), der als Sicherheitseinrichtung die Längs- und Querfahrt des Bodenfertigers (1) zur Einhaltung von variablen, vorgebbaren Sicherheitsbereichen (8a, 8b) von in Fahrtrichtung (a) befindlichen Objekten (9) steuert und als Entfernungsmesser zur laufenden Messung des seitlichen Abstandes (10) des Bodenfertigers (1) von den gefertigten Steinsätzen (2) bzw. Steinen einer Steinsatzreihe (3) Teil einer Steuerung zur Geradeauslenkung des Bodenfertigers (1) mit einem beliebig vorgebbaren Abstand (11) entlang der Steinsatzreihe (3) ist, wobei die Steuerung zur Lenkung der Räder (13) des Bodenfertigers (1) eine Rechner-Steuereinheit (14) aufweist, die entsprechend den Meßsignalen des Laser-Scanners (7) die Räder (13) des Bodenfertigers (1) während der Vorwärts- und Rückwärtsfahrt lenkt.

2. Bodenfertiger nach Anspruch 1, dadurch gekennzeichnet, daß der Rechner der Rechner-Steuereinheit (14) zur Lenkung der Rader (13) des Bodenfertigers (1) während der Steinfertigung aus den gemessenen Abständen (10) zwischen Bodenfertiger (1) und seitlicher Außenkontur (15) der Steine bzw. Steinsätze (2) eine sich an dieser (15) orientierende Führungsgerade (G) für die Geradeausfahrt (a) des Bodenfertigers (1) errechnet und daß die Steuereinheit (14) bei einem Über- oder Unterschreiten eines durch die Führungsgerade (G) festgelegten Toleranzbereiches (T) für den seitlichen Sollabstand (11) des Bodenfertigers (1) zur Steinsatzreihe (3) durch die von dem Laser-Scanner (7) gemessenen Seitenabstände (10), die auf den Abstand der Außenkontur (16) der Radkästen (12) der Räder (13) zu den Steinsätzen (2) umgerechnet werden, die Lenkstellung der Räder (13) des Bodenfertigers (1) entsprechend korigiert.

3. Bodenfertiger nach Anspruch 1 und 2, dadurch gekennzeichnet, daß der Laser-Scanner (7) auf der Mittellängsachse (5-5) des Bodenfertigers (1) angeordnet ist und den seitlichen Abstand (10) der Mittellängsachse (5-5) zur Steinsatzreihe (3) mißt.

4. Bodenfertiger nach einem der Ansprüche 1 bis 3, gekennzeichnet durch einen weiteren an der Heckseite (17) des Bodenfertigers (1) auf der Mittellängsachse (5-5) desselben angeordneten, als Sicherheits- und Meßeinrichtung arbeitenden Laser-Scanner (7).

5. Bodenfertiger nach einem der Ansprüche 1 bis 4, gekennzeichnet durch einen vollautomatischen Betrieb des Bodenfertigers (1) in einer geschlossenen, als Schallschutzraum wirkenden Fertigungshalle (18),wobei die aktuellen Standortkoordinaten des Bodenfertigers (1) sowie die Lagekoordinaten der Produkte für die Materialzubringung und die Produktabtragung gespeichert und an das Produktionssystem weitergegeben werden.

6. Bodenfertiger nach Anspruch 5, gekennzeichnet durch an den Wänden (19-22) der Fertigungshalle (18) angeordnete Einrichtungen wie Reflektorbänder (23) als Referenz für den bzw. die Laser-Scanner (7) des Bodenfertigers (1), insbesondere für die Fertigung der ersten Stein- bzw. Steinsatzreihe (3).
